# EUROPEAN PATENT SPECIFICATION

(11) **EP 1 228 151 B1**
(45) Date of publication and mention of the grant of the patent: **26.11.2003**
(21) Application number: 00964777.7
(22) Date of filing: 12.09.2000
(51) Int. Cl.: C09D 4/00, C08F 230/08, C08F 230/02, C08F 222/10

(54) **RESIN COMPOSITION COMPRISING INORGANIC PARTICLES AND POLYMERIZABLE PHOSPHATES AND THE PRODUCTS PREPARED THEREFROM**
ANORGANISCHE PARTIKEL UND POLYMERISIERBARE PHOSPHATE ENTHALTENDE HARZZUSAMMENSETZUNG UND DARAUS HERGESTELLTE PRODUKTE
COMPOSITION DE RESINE CONTENANT DES PARTICULES INORGANIQUES ET DES PHOSPHATES POLYMERISABLES ET PRODUITS PREPARES A PARTIR DE CETTE RESINE

(30) Priority: 24.09.1999 JP 27128199
(43) Date of publication of application: 07.08.2002
(73) Proprietor: DSM IP Assets B.V., 6411 TE Heerlen (NL); JSR Corporation, Tokyo 104-8410 (JP); Japan Fine Coatings Co., Ltd., Tokyo 104-8410 (JP)
(72) Inventor: YAMAGUCHI, Yoshikazu, Tsuchiura, Ibaraki 300-0033 (JP); YASHIRO, Takao, Tsuchiura Ibaraki 360 (JP); NISHIWAKI, Isao, Toride Ibaraki (JP); UKACHI, Takashi, Ushiku Ibaraki 300-12 (JP)
(74) Representative: Hoogendam, Gerrie Christine
(86) International application number: NL0000648
(87) International publication number: WO01021717

(56) References cited:
- WO-A-97/12942
- PATENT ABSTRACTS OF JAPAN vol. 1998, no. 09, 31 July 1998 (1998-07-31) & JP 10 095951 A (SUMITOMO CHEM. CO. LTD.), 14 April 1998 (1998-04-14) cited in the application

## Description

### Field of the Invention

The present invention relates to a resin composition and a cured product made from the resin composition.

### Prior Art

In recent years, a resin composition exhibiting excellent coatability and capable of forming coatings with high hardness, superior scratch resistance, excellent abrasion resistance, low curling properties, superb adhesion, and excellent transparency and appearance is desired as a protective coating material to prevent stains or scratches on the surface of various substrates, an adhesive for various substrates, a sealing material, or a vehicle for printing ink.

Specifically, to increase hardness of the coatings, a crosslinking density of the coatings must be increased after cure. However, an increase in the hardness accompanies cure shrinkage of the coatings, which produced a large curl. To have well balanced hardness and low curl properties is thus difficult. To improve scratch resistance and abrasion resistance of the coatings, the bonding strength between particles and matrix in the coatings must be increased. However, a high particle-matrix bonding strength cannot always be obtained by conventional technologies. Thus, there have been no products that produce coatings with well balanced hardness, scratch resistance, abrasion resistance, and low curling properties.

Various materials comprising colloidal silica as particles have been proposed with an objective to improve scratch resistance among these required characteristics. For example, US 3,451,838 and US 2,404,357 disclose compositions comprising a hydrolyzate of alkoxysilane and colloidal silica as major components to be used as a heat-curable coating material. Japanese Patent Publication No. 21815/1987 (WO 82/02403) discloses a composition for a photocurable coating material comprising acrylate and particles of colloidal silica of which the surface is modified by methacryloxy silane. An object of these prior art technologies is to improve coating materials by treating the surface of silica particles with a specific organic silane compound under specific conditions. However, these coating materials do not necessarily satisfy satisfactorily all of the requirements such as coatability, and high hardness, superior scratch resistance, excellent abrasion resistance, low curling properties, and superb adhesion, when made into coatings.

Japanese Patent Application Laid-open No. 95951/1998 discloses a surface coating material comprising a specific polymerizable compound, a polymerizable acid phosphate, and colloidal silica. Although surface coating material can produce hard coatings with a pencil hardness of about 5H to 6H, the scratch resistance and abrasion resistance of the coatings are not necessarily satisfactory.

### Problems to be solved by the Invention

The present invention has been completed in view of the above-described problems and has an object of providing a resin composition exhibiting excellent coatability and capable of forming coatings with high hardness, superior scratch resistance, excellent abrasion resistance, low curling properties, and superb adhesion, particularly well balanced hardness, scratch resistance, abrasion resistance, and low curling properties on the surface of various substrates, for example, plastics (polycarbonate, polymethacrylate, polystyrene, polyester, polyolefin, epoxy resins, melamine resins, triacetyl cellulose resins, ABS resins, AS resins, norbornene resins, etc.), metals, woods, papers, glasses, and slates, as well as the cured products made from the resin composition.

### Means for Solving the Problems

As a result of extensive studies, the present inventors have found that the products having all of the above characteristics, specifically the coatings with well balanced high hardness, scratch resistance, abrasion resistance, and low curling properties, can be obtained from a resin composition comprising: (A) particles produced by bonding oxide particles of one or more specific elements and an organic compound containing a polymerizable unsaturated group , (B) a polymerizable acid phosphate of the following formula (1), 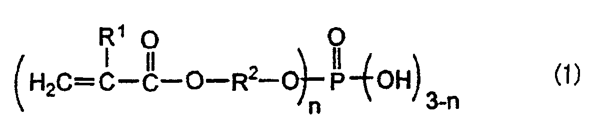 wherein R¹ is a hydrogen atom or a methyl group, R² is a divalent organic group, and n is an integer of 1 or 2, and (C) a compound having at least two polymerizable unsaturated groups in the molecule.

### Preferred Embodiment of the Invention

The resin composition and the cured products thereof of the present invention will now be described in more detail.

### I. Resin Composition

The resin composition of the present invention comprises (A) particles produced by bonding oxide particles of one or more specific elements and an organic compound containing a polymerizable unsaturated group (such particles may be called "crosslinkable particles (A)"), (B) a polymerizable acid phosphate (hereinafter may be called "phosphate monomer (B)"), and (C) a compound having at least two polymerizable unsaturated groups in the molecule (hereinafter may be called "compound (C)").

Each components for the resin composition of the present invention will be described in more detail.

### 1. Crosslinkable particles (A)

The crosslinkable particles (A) used in the present invention are the particles produced by bonding particles of at least one oxide of an element selected from the group consisting of silicon, aluminum, zirconium, titanium, zinc, germanium, indium, tin, antimony, and cerium, and an organic compound containing a polymerizable unsaturated group.

### (1.1) Oxide particles

For obtaining uncolored cured coatings from the resin composition, the oxide particles used in the present invention (hereinafter may be called "oxide particles (P)") should be particles of at least one oxide of an element selected from the group consisting of silicon, aluminum, zirconium, titanium, zinc, germanium, indium, tin, antimony, and cerium.

As these oxides, for example, silica, alumina, zirconia, titanium oxide, zinc oxide, germanium oxide, indium oxide, tin oxide, indium-tin oxide (ITO), antimony oxide, and cerium oxide can be given. Of these, silica, alumina, zirconia, and antimony oxide are preferable from the viewpoint of high hardness. These compounds may be used either individually or in combination of two or more. In addition, oxide particles of these elements are preferably in the form of a powder or a solvent dispersion sol. When the oxide particles are in the form of a dispersion, an organic solvent is preferable as a dispersion medium from the viewpoint of mutual solubility with other components and dispersibility. As examples of such organic solvents, alcohols such as methanol, ethanol, isopropanol, butanol, and octanol; ketones such as acetone, methyl ethyl ketone, methyl isobutyl ketone, and cyclohexanone; esters such as ethyl acetate, butyl acetate, ethyl lactate, and γ-butyrolactone, propylene glycol monomethyl ether acetate, and propylene glycol monoethyl ether acetate; ethers such as ethylene glycol monomethyl ether and diethylene glycol monobutyl ether; aromatic hydrocarbons such as benzene, toluene, and xylene; and amides such as dimethylformamide, dimethylacetamide, and N-methylpyrrolidone can be given. Of these, methanol, isopropanol, butanol, methyl ethyl ketone, methyl isobutyl ketone, ethyl acetate, butyl acetate, toluene, and xylene are preferable.

The number average particle diameter of the oxide particles is in general from 0.001 µm to 2 µm, preferably from 0.001 µm to 0.2 µm, and more preferably from 0.001 µm to 0.1 µm. If the number average particle diameter is more than 2 µm, transparency of the cured product and surface conditions of the coating tend to be impaired. Moreover, various surfactants and amines may be added to improve dispersibility of particles.

Among silicon oxide particles (silica particles, for example), given as examples of commercially available products of colloidal silica are Methanol Silica Sol, IPA-ST, MEK-ST, NBA-ST, XBA-ST, DMAC-ST, ST-UP, STOUP, ST-20, ST-40, ST-C, ST-N, ST-O, ST-50, ST-OL (manufactured by Nissan Chemical Industries, Ltd.). Examples of powdery silica are products available under the trade names AEROSIL 130, AEROSIL 300, AEROSIL 380, AEROSIL TT600, and AEROSIL OX50 (manufactured by Japan Aerosil Co., Ltd.), Sildex H31, H32, H51, H52, H121, H122 (manufactured by Asahi Glass Co., Ltd.), E220A, E220 (manufactured by Nippon Silica Industrial Co., Ltd.), SYLYSIA470 (manufactured by Fuji Silycia Chemical Co., Ltd.) and SG Flake (manufactured by Nippon Sheet Glass Co., Ltd.).

Given as commercially available products of aqueous dispersion products of alumina are Alumina Sol-100, -200, -520 (trade names, manufactured by Nissan Chemical Industries, Ltd.); as an isopropanol dispersion of alumina, AS-1501 (trade name, manufactured by Sumitomo Osaka Cement Co., Ltd.); as a toluene dispersion of alumina, AS-150T (trade name, manufactured by Sumitomo Osaka Cement Co., Ltd.); as a toluene dispersion of zirconia, HXU-110JC (trade name, manufactured by Sumitomo Osaka Cement Co., Ltd.); as an aqueous dispersion product of zinc antimonate powder, Celnax (trade name, manufactured by Nissan Chemical Industries, Ltd.); as powders and solvent dispersion products of alumina, titanaium oxide, tin oxide, indium oxide, zinc oxide, etc., Nano Tek, for example, (trade name, manufactured by CI Kasei Co., Ltd.); as an aqueous dispersion sol of antimony dope-tin oxide, SN-100D (trade name, manufactured by Ishihara Sangyo Kaisha, Ltd.); as an ITO powder, a product manufactured by Mitsubishi Material Co., Ltd.; and as an aqueous dispersion of cerium oxide, Needral (trade name, manufactured by Taki Chemical Co., Ltd.).

The shape of oxide particles may be globular, hollow, porous, rod-like, plate-like, fibrous, or amorphous, with a globular shape being preferable. The specific surface area of oxide particles (determined by a BET specific surface area measuring method using nitrogen) is preferably in the range from 10 to 1000 m²/g, and more preferably 100 to 500 m²/g. These oxide particles can be used either in the form of a dry powder or a dispersion in water or an organic solvent. For example, a dispersion liquid of fine particles of oxide known in the art as a solvent dispersion sol of these oxides can be used. Use of a solvent dispersion sol of oxide is particularly desirable in the application in which excellent transparency of cured products is required.

### (1.2) Organic compound

The organic compound used in the present invention is a compound having a polymerizable unsaturated group in the molecule, and preferably a specific organic compound comprising the group shown by the formula (2), 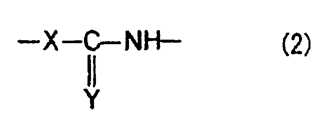 wherein X represents NH, O (oxygen atom), or S (sulfur atom), and Y represents O or S.

In addition, the organic compound preferably includes a group represented by [-O-C(=O)-NH-] and at least one of the groups represented by [-O-C(=S)-NH-] or [-S-C(=O)-NH-]. It is preferable that such an organic compound have a silanol group or a group which forms a silanol group by hydrolysis in the molecule.

### (1.2.1) Polymerizable unsaturated group

There are no specific limitations to the polymerizable unsaturated group contained in the organic compound. An acryloyl group, methacryloyl group, vinyl group, propenyl group, butadienyl group, styryl group, ethynyl group, cinnamoyl group, maleate group, and acrylamide group, can be given as suitable examples.

This polymerizable unsaturated group is a structural unit to effect an addition polymerization by active radicals.

### (1.2.2) The group shown by the above formula (2)

There are 6 types for the group [-X-C (=Y)-NH-] of the formula (2) contained in the specific organic compound, specifically, they are [-O-C(=O)-NH-], [-O-C(=S)-NH-], [-S-C(=O)-NH-], [-NH-C(=O)-NH-], [-NH-C(=S)-NH-], and [-S-C(=S)-NH-]. These groups may be used either individually or in combinations of two or more. Among these, the combined use of the group [-O-C(=O)-NH-] and either one of the groups [-O-C(=S)-NH-] and [-S-C(=O)-NH-] is preferable from the viewpoint of ensuring excellent heat stability.

The above-mentioned group [-X-C (=Y)-NH-] of the formula (2) is considered to generate a moderate cohesive force by a hydrogen bond among molecules, which provides the cured product with characteristics such as superior mechanical strength, excellent adhesion properties to substrates, and good heat resistance.

### (1.2.3) Silanol group or a group which forms a silanol group by hydrolysis.

The organic compound is preferably a compound having a silanol group (hereinafter may be called "silanol group-containing compound") or a compound which forms a silanol group by hydrolysis (hereinafter may be called "silanol group-forming compound"). As a silanol group-forming compound, a compound having an alkoxy group, aryloxy group, acetoxy group, amino group, halogen group, or the like on a silicon atom can be given, with a compound including an alkoxy group or aryloxy group on a silicon atom, specifically, an alkoxysilyl group-containing compound or an aryloxysilyl group-containing compound being preferable.

The silanol group or the silanol group-forming site of the silanol group-forming compound is the structural unit which bonds with the oxide particles by a condensation reaction or the condensation reaction after hydrolysis.

### (1.2.4) Preferable embodiment

The compounds shown by the following formula (3) can be given as examples of preferable organic compounds, 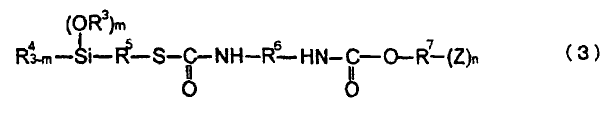 wherein R³ and R⁴ individually represent a hydrogen atom or an alkyl group or aryl group having 1-8 carbon atoms such as a methyl group, ethyl group, propyl group, butyl group, octyl group, phenyl group, xylyl group, and the like. wherein m is an integer from 1-3.

Examples of the group represented by [(R³O)ₘR⁴₃₋ₘSi-] are trimethoxysilyl group, triethoxysilyl group, triphenoxysilyl group, methyldimethoxysilyl group, and dimethylmethoxysilyl group. Of these groups, trimethoxysilyl group, and the triethoxysilyl group, are preferable.

R⁵ is a divalent organic group having a C₁-C₁₂ aliphatic or aromatic structure which may include a linear, branched, or cyclic structure.

R⁶ is a divalent organic group and usually selected from the divalent organic groups having a molecular weight from 14 to 10,000, and preferably from 76 to 500.

R⁷ is an organic group of a (n+1) valence and preferably selected from the group consisting of linear, branched, or cyclic, saturated or unsaturated hydrocarbon groups.

Z is a monovalent organic group having a polymerizable unsaturated group in the molecule which causes an inter-molecular cross-linking reaction in the presence of reactive radicals. Moreover, n is an integer preferably from 1 to 20, and more preferably from 1 to 10, and most preferably from 1 to 5.

The organic compound used in the present invention can be synthesized by a method described in Japanese Patent Application Laid-open No. 100111/1997 (WO 97/12942) for example. Specifically, (a) a method comprising an addition reaction of a mercaptoalkoxysiiane, a polyisocyanate compound, and an active hydrogen group-containing polymerizable unsaturated compound can be used. Another method (b) comprises a direct reaction of a compound having both an alkoxy silyl group and an isocyanate group in the molecule with an active hydrogen-containing polymerizable unsaturated compound. Still another method (c) comprises an addition reaction of a compound having both a polymerizable unsaturated group and an isocyanate group in the molecule with a mercapto alkoxysilane compound or aminosilane compound.

Among these methods, the method (a) is preferably used to synthesize the compound shown by the above-mentioned formula (3).

### (1.3) Preparation of crosslinkable particles (A)

Although there are no specific limitations to the method for preparing the crosslinkable particles (A) used in the present invention, a method of reacting the organic compound and the oxide particles can be given as an example. The oxide particles are known to include moisture on the surface of particles as adsorbed water under usual storage conditions. in addition, components which react with the silanol group-forming compound, for example a hydroxide or a hydrate, are presumed to be present at least on the surface of the oxide particles. Therefore, the crosslinkable particles (A) can be prepared by mixing the silanol group-forming compound and oxide particles, and heating the mixture while stirring. It is desirable that the reaction be carried out in the presence of water to efficiently bind the silanol group-forming site possessed by the organic compound and the oxide particles. However, water may not be present when the organic compound possesses a silanol group. Therefore, the crosslinkable particles (A) is prepared by a method which includes at least the operation of blending the oxide particles and the organic compound.

The amount of the organic compound bonded to the oxide particles is preferably 0.01 wt% or more, more preferably 0.1 wt% or more, and particularly preferably 1 wt% or more, for 100 wt% of the crosslinkable particles (A) (the total of the oxide particles and the specific organic compound). If the amount of the organic compound bonded to the oxide particles is less than 0.01 wt%, the crosslinkable particles (A) exhibit only inadequate dispersibility in the composition, which may result in cured products with insufficient transparency and scratch resistance. Moreover, the ratio of oxide particles in the raw materials in the preparation of the crosslinkable particles (A) is, as mentioned above, preferably 5-99 wt%, and more preferably 10-98 wt%.

The method of preparing the crosslinkable particles (A) will now be described in more detail taking the alkoxysilyl group-containing compound (alkoxysilane compound) shown by the above formula (3) as an example of the silanol group-forming compound.

The amount of water consumed in the hydrolysis of the alkoxysilane compound in the preparation of the crosslinkable particles (A) may be the amount to hydrolyze at least one alkoxy group on the silicon atoms in the molecule. Preferably, the amount of water which is added or present during the hydrolysis reaction is one third (1/3) or more of the number of mols of the total alkoxy groups on the silicon atoms, with particularly preferable amount being from 1/2 to 3 times of the number of mols of the total alkoxy groups. The product obtained by blending the alkoxysilane compound and oxide particles under the condition where no water is present at all is a product in which the alkoxysilane compound is physically adsorbed on the surface of oxide particles. Only poor hardness and scratch resistance effect can be exhibited by the cured product obtained from the composition comprising such crosslinkable particles (A).

The methods which can be selected for the preparation of crosslinkable particles (A) include a method of separately hydrolyzing the above-mentioned alkoxysilane compound, and mixing the hydrolyzed product with a powder of oxide particles or a solvent dispersion sol of oxide particles with heating and stirring; a method of carrying out the hydrolysis of the alkoxysilane compound in the presence of the oxide particles; and a method of treating the surface of the oxide particles in the presence of, for example, the compound (D). Among these, the method of hydrolyzing the alkoxysilane compound in the presence of oxide particles is desirable. The treatment for the preparation of the crosslinkable particles (A) is carried out at a temperature from 0°C to 150°C, and preferably from 20°C to 100°C. The treating time is usually from 5 minutes to 24 hours.

When oxide particles in the form of a powder are used in the preparation of the crosslinkable particles (A), an organic solvent may be added to ensure a smooth and homogeneous reaction with the alkoxysilane compound. The same solvents as used as the above-mentioned dispersion medium for the oxide particle sol can be used as such an organic solvent. There are no specific limitations to the types of these solvents, inasmuch as a smooth and homogeneous reaction is ensured.

When a solvent dispersion sol of oxide particles is used as the raw material, the crosslinkable particles (A) can be prepared by a method comprising at least the operation of mixing the solvent dispersion sol and the organic compound. Here, an organic solvent which is mutually soluble with water can be added to ensure homogeneity in the initial stage of the reaction and smooth reaction.

Moreover, an acid, salt, or base may be added as a catalyst to accelerate the reaction to produce the crosslinkable particles (A). Given as examples of the acid are inorganic acids for example hydrochloric acid, nitric acid, sulfuric acid, and phosphoric acid, organic acids for example methanesulfonic acid, toluenesulfonic acid, phthalic acid, malonic acid, formic acid, acetic acid, oxalic acid, methacrylic acid, acrylic acid, and itaconic acid. Examples of the salt are ammonium salts for example tetramethylammonium chloride and tetrabutylammonium chloride. Examples of the base that may be added are, aqueous ammonia; primary, secondary, or tertiary aliphatic amines for example diethylamine, triethylamine, dibutylamine, and cyclohexylamine; aromatic amines for example pyridine; sodium hydroxide, potassium hydroxide; as well as quaternary ammonium hydroxides for example tetramethylammonium hydroxide, tetrabutylammonium hydroxide.

Among these, preferable catalysts are acids such as organic acids, and bases such as tertiary amines and quaternary ammonium hydroxide. The amount of these acids, salts, or bases to be added is preferably from 0.001 to 1.0 part by weight, and more preferably from 0.01 to 0.1 part by weight, for 100 parts by weight of the alkoxysilane compounds.

Preferably, a dehydrating agent is added to promote the reaction.

As a dehydrating agent, inorganic compounds such as zeolite, anhydrous silica, and anhydrous alumina, and organic compounds such as methyl orthoformate, ethyl orthoformate, tetraethoxymethane, and tetrabutoxymethane can be used. Of these, the organic compounds are preferred, with ortho esters such as methyl orthoformate and ethyl orthoformate being particular preferred.

The amount of the alkoxysilane compound bonded with the crosslinkable particles (A) can be determined as a weight loss (%) when a dry powder is burnt completely in air in a thermogravimetric analysis at a temperature from 110°C to 800°C.

The amount of crosslinkable particles (A) in the resin composition is 5-90 wt%, and preferably 10-70 wt%, for 100 wt% of the composition (the total of the crosslinkable particles (A), the phosphate monomer (B), and the compound (C)). If less than 5 wt%, hardness of the cured products may be insufficient; if more than 90 wt%, there may be the occasion where coatings are not cured and no coating films can be produced. The amount of the crosslinkable particles (A) here means the amount of the solid components and does not include the amount of solvents when the crosslinkable particles (A) are used in the form of a solvent dispersion sol.

### 2. Phosphate monomer (B)

The phosphate monomer (B) which is used in the present invention is a polymerizable acid phosphate monomer (B) shown by the formula (1 ), 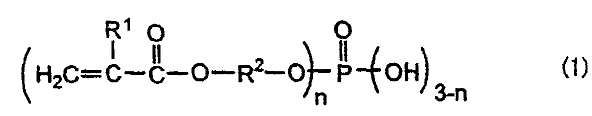 wherein R¹ is a hydrogen atom or a methyl group, R² is a divalent organic group, and n is an integer of 1 or 2. The phosphate monomer (B) is used for improving balance between the hardness, scratch resistance, abrasion resistance, and low curling properties of the coatings made from the composition of the present invention.

Given as examples of phosphate monomer (B) used in the present invention are mono or bis (2-(meth)acryloyloxyethyl)acid phosphate, mono or bis(2-(meth)acryloyloxypropyl)acid phosphate, mono or bis(3-(meth)acryloyloxypropyl)acid phosphate, mono or bis(6-(meth)acryloyloxyhexyl)acid phosphate, mono or bis(10-(meth)acryloyloxydecyl)acid phosphate, mono or bis(1-chloromethyl-2-(meth)acryloyloxyethyl)acid phosphate, and 2-methacryloyloxyethylphenyl acid phosphate; lactone-modified derivatives of these compounds; and polyoxyalkylene-modified derivatives of these compounds. Of these compounds, mono or bis (2-(meth)acryloyloxyethyl)acid phosphate is preferable for obtaining cured products with high hardness.

These compounds may be used either individually or in combination of two or more as the phosphate monomer (B) in the present invention.

In the present invention, not only purified phosphate monomers, but also industrially manufactured phosphate monomers which may contain by-products can be used as the phosphate monomer (B).

As examples of industrially manufactured phosphate monomers used as component (B), Light Ester P-1 M, P-2M manufactured by Kyoeisha Chemical Co., Ltd., KAYAMER PM-2, PM-21, manufactured by Nippon Kayaku Co., Ltd., can be given.

The amount of the phosphate monomer (B) incorporated in the composition of the present invention is 0.01-15 parts by weight, and preferably 0.01-10 parts by weight, for 100 parts by weight of the composition (the total of the crosslinkable particles (A), the phosphate monomer (B), and the compound (C)). If less than 0.01 parts by weight, scratch resistance and abrasion resistance of the cured products may be inadequate; if more than 15 parts by weight, the hardness may be insufficient.

### 3. Compound (C)

The compound (C) which is used in the present invention is a compound other than the compounds for component (B) having two or more polymerizable unsaturated groups. The compound (C) is preferably used to increase film-forming capability of the composition. Although there are no specific limitations to the types of compound (C) so long as the compound has two or more polymerizable unsaturated groups, (meth)acrylic esters and vinyl compounds can be given as examples. Of these, (meth)acrylic esters are preferred.

The following compounds can be given as specific examples of the compound (C) used in the present invention.

Given as examples of (meth)acrylic esters are trimethylolpropane tri(meth)acrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, glycerol tri(meth)acrylate, tris(2-hydroxyethyl) isocyanurate tri(meth)acrylate, ethylene glycol di(meth)acrylate, 1,3-butanediol di(meth)acrylate, 1,4-butanediol di(meth)acrylate, 1,6-hexanediol di(meth)acrylate, neopentyl glycol di(meth)acrylate, diethylene glycol di(meth)acrylate, triethylene glycol di(meth)acrylate, dipropylene glycol di(meth)acrylate, and bis(2-hydroxyethyl) isocyanurate di(meth)acrylate; as well as ethylene oxide or propylene oxide addition poly(meth)acrylates to these (meth)acrylates, oligoester (meth)acrylates, oligoether (meth)acrylates, oligourethane (meth)acrylates and oligoepoxy (meth)acrylates having two or more (meth)acryloyl groups in the molecule. Among these, dipentaerythritol hexa(meth)acrylate, dipentaerythritol penta(meth)acrylate, pentaerythritol tetra(meth)acrylate, and ditrimethylolpropane tetra(meth)acrylate are desirable.

Examples of vinyl compounds, are divinyl- benzene, ethylene glycol divinyl ether, diethylene glycol divinyl ether, triethylene glycol divinyl ether.

Given as examples of commercially available products of the compound (C) are the products having the trade names Aronix M-400, M-408, M-450, M-305, M-309, M-310, M-315, M-320, M-350, M-360, M-208, M-210, M-215, M-220, M-225, M-233, M-240, M-245, M-260, M-270, M-1100, M-1200, M-1210, M-1310, M-1600, M-221, M-203, TO-924, TO-1270, TO-1231, TO-595, TO-756, TO-1343, TO-902, TO-904, TO-905, and TO-1330 (manufactured by Toagosei Co., Ltd.); KAYARAD D-310, D-330, DPHA, DPCA-20, DPCA-30, DPCA-60, DPCA-120, DN-0075, DN-2475, SR-295, SR-355, SR-399E, SR-494, SR-9041, SR-368, SR-415, SR-444, SR-454, SR-492, SR-499, SR-502, SR-9020, SR-9035, SR-111, SR-212, SR-213, SR-230, SR-259, SR-268, SR-272, SR-344, SR-349, SR-601, SR-602, SR-610, SR-9003, PET-30, T-1420, GPO-303, TC-120S, HDDA, NPGDA, TPGDA, PEG400DA, MANDA, HX-220, HX-620, R-551, R-712, R-167, R-526, R-551, R-712, R-604, R-684, TMPTA, THE-330, TPA-320, TPA-330, KS-HDDA, KS-TPGDA, KS-TMPTA (manufactured by Nippon Kayaku Co., Ltd.); and Light Acrylate PE-4A, DPE-6A, DTMP-4A (manufactured by Kyoeisha Chemical Co., Ltd.).

The amount of the compound (C) used in the present invention is preferably from 10-90 wt%, and more preferably from 20-85 wt%, for 100 parts by weight of the composition (the total of the crosslinkable particles (A), the phosphate monomer (B), and the compound (C)). If less than 10 wt%, hardness of the cured products is insufficient; if more than 90 wt%, a low curing properties in the cured products may be insufficient.

As required, a compound having one polymerizable unsaturated group in the molecule may be used in the composition of the present invention in addition to the compound (C).

### 4. Polymerization initiator (D)

In addition to the above-mentioned crosslinkable particles (A), phosphate monomer (B), and the compound (C), a polymerization initiator (D) may optionally be added to the composition of the present invention.

Commonly used compounds which thermally generates active radicals (heat polymerization initiators) and compounds which generates active radicals by irradiation of radioactive rays (radical (photo) polymerization initiators) can be given as examples of the compounds used as the polymerization initiator (B).

There are no specific limitation to the radiation (photo) polymerization initiator inasmuch as such an initiator can generate radicals by irradiation of light and initiate polymerization. Examples of such intiators include acetophenone, acetophenone benzyl ketal, 1-hydroxycyclohexyl phenyl ketone, 2,2-dimethoxy-1,2-diphenylethan-1-one, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, benzoin propyl ether, benzoin ethyl ether, benzyl dimethyl ketal, 1-(4-isopropylphenyl)-2-hydroxy-2- methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio)phenyl]-2-morpholino-propan-1-one, 2-benzyl-2-dimethylamino-1-(4-morpholinophenyl)-butanone-1,4-(2-hydroxyethoxy)phenyl-(2-hydroxy-2-propyl)ketone, 2,4,6-trimethylbenzoyl diphenylphosphine oxide, and bis-(2,6-dimethoxybenzoyl)-2,4,4-trimethylpentylphosphine oxide.

Examples of commercially available products of the radiation (photo) polymerization initiator are lrgacure 184, 369, 651, 500, 819, 907, 784, 2959, CGI1700, CGI1750, CGI1850, CG24-61, Darocur 1116, 1173 (manufactured by Ciba Specialty Chemicals Co., Ltd.), Lucirin TPO, LR8893 (manufactured by BASF), Ubecryl P36 (manufactured by UCB), and Ezacure KIP150, KIP65LT, KIP100F, KT37, KT55, KTO46, KIP75/B (manufactured by Lamberti), the like can be given.

The amount of the polymerization initiator (D) which is optionally used in the composition of the present invention is preferably 0.01-20 parts by weight, and more preferably 0.1-10 parts by weight, for 100 parts by weight of the composition (the total of the crosslinkable particles (A) and phosphate monomer (B)). If less than 0.01 parts by weight, hardness of the cured products may be insufficient; if more than 20 parts by weight, the inner layer may remain uncured when the product subjected to a curing operation.

A heat-polymerization initiator can be optionally added together when curing the resin composition of the present invention. Peroxides and azo compounds can be given as examples of preferable heat-polymerization initiators.

Specific examples include benzoyl peroxide, t-butyl peroxybenzoate, and azobisisobutyronitrile.

### 5. Method of coating the composition

The composition of the present invention is suitable as a coating material. Plastics (polycarbonate, polymethylene acrylate, polystyrene, polyester, polyolefin, epoxy, melamine, triacetyl cellulose, ABS, acrylonitrile-styrene resin, norbornene resin, etc.), metals, woods, papers, glass, slates, and the like can be given as examples of the substrates to which the composition is coated. These substrates may be either in the shape of a film or a formed three-dimensional object. Examples of conventional coating methods are dipping, spray coating, flow coating, shower coating, roll coating, and brush coating. The thickness of coating films after cure and drying is usually from 0.1 to 400 µm, and preferably from 1 to 200 µm.

To adjust the coating film thickness, the composition of the present invention can be used by diluting with a solvent. When used as a coating material, for example, the viscosity of the composition is usually from 0.1 to 50,000 mPa·s/25°C, and preferably from 0.5 to 10,000 mPa·s/25°C.

### 6. Method of curing the composition

The composition of the present invention is cured by heat and/or radioactive rays by using thermal polymerization initiators and/or heat polymerization initiators as required, as mentioned above.

When the composition is cured by heat, an electric heater, infrared ray lamp, hot blast, and the like can be used as the heat source.

When radioactive rays (light) are used, there are no specific limitations to the source of the radioactive rays so long as the composition can be cured in a short period of time after coating. As examples of the source of infrared rays, a lamp, resistance heating plate, and a laser, can be given. As examples of the source of visible rays, sunlight, a lamp, fluorescent lamp, and a laser, can be given. As the source of ultraviolet rays, a mercury lamp, halide lamp, and a laser can be given. As examples of the source of electron beams, a system of utilizing thermoelectrons produced by a commercially available tungsten filament, a cold cathode method generating electron beams by passing a high voltage pulse through a metal, and a secondary electron method which utilizes secondary electrons produced by collision of ionized gaseous molecules and a metal electrode can be given. As the source of α-rays, β-rays, and γ-rays, for example, fissionable materials such as Co⁶⁰ can be given. These radioactive rays can be used either individually or in combinations of two or more. In the latter case, the two or radioactive rays may be used either simultaneously or with a certain intervals.

### II. Cured products

The cured products of the present invention can be obtained by applying the composition onto a plastic substrates, for example, and curing the coating. Specifically, such a cured product can be obtained as a coated form by applying the composition onto an object, drying the coating by removing volatile components at a temperature preferably from 0 to 200°C, and curing the coating by heat and/or radioactive rays. Curing by heat is preferably performed under the conditions from 20 to 150°C for 10 seconds to 24 hours. When the coating is cured by radioactive rays, use of ultraviolet rays and electron beams are preferable. Ultraviolet rays are irradiated at a dose preferably from 0.01-10 J/cm², and more preferably from 0.1 to 2 J/cm². Electron beams are irradiated under the conditions of 10-300 KV, an electron density of 0.02-0.30 mA/cm², and at a dose from 1-10 Mrad.

Because the cured products of the present invention possess excellent hardness, superior scratch resistance, high abrasion resistance, low curling properties, and superb adhesion, particularly well balanced hardness, scratch resistance, abrasion resistance, and low curling properties, the products are suitable for use as a protective coating material to prevent stains or scratches on plastic optical parts, touch panels, film-type liquid crystal elements, plastic containers, or flooring materials, wall materials, and artificial marbles which are used for architectural interior finish; as an adhesive for various substrates, a sealing material, and a vehicle for printing ink.

### Examples

The present invention will be explained in more detail by examples, which are not intended to be limiting of the present invention. In the description below, "parts" and "%" respectively mean "parts by weight" and "wt%", unless otherwise indicated.

The words "solid content" in the present invention means the content of components excluding volatile components such as solvents from the composition in the present invention, specifically, "solid content" means the content of a residue (nonvolatile components) obtained by drying the composition for one hour on a hot plate at 120°C.

### Synthesis of organic compounds

### Synthetic Example 1

20.6 parts of isophorone diisocyanate was added to a solution of 7.8 parts of mercaptopropyltrimethoxysilane and 0.2 part of dibutyl tin dilaurate in dry air in one hour while stirring at 50°C. The mixture was stirred for a further three hours at 60°C. After the addition of 71.4 parts of pentaerythritol triacrylate dropwise in one hour at 30°C, the mixture was stirred for a further three hours at 60°C with heating to obtain an organic compound (S1). The amount of isocyanate remaining in the product was analyzed to find that the remaining amount was 0.1% or less, indicating that the reaction was completed almost quantitatively.

### Synthetic Example 2

38.7 parts of 1,3-bis(isocyanatemethyl)cyclohexane was added to a solution of 38.4 parts of mercaptopropyltrimethoxysilane and 0.2 part of dibutyl tin dilaurate in dry air in one hour while stirring at 50°C. The mixture was stirred for a further three hours at 70°C. After the addition of 22.7 parts of 2-hydroxyethyl acrylate dropwise in one hour at 30°C, the mixture was stirred for a further ten hours at 60°C with heating to obtain an organic compound (S2). The amount of isocyanate remaining in the product was analyzed to find that the remaining amount was 0.1% or less, indicating that the reaction was completed almost quantitatively.

### Preparation of crosslinkable particles (A)

Examples for preparing crosslinkable particles (A) are shown in Preparation Examples 1 to 4. The results are summarized in Table 1.

### Preparation Example 1

A mixture of 8.7 parts of the organic compound (S1) synthesized in Synthetic Example 1, 91.3 parts of methyl ethyl ketone silica sol (P1) (MEK-ST, manufactured by Nissan Chemical Industries, Ltd., the number average particle diameter: 0.022 µm, silica concentration: 30%), 0.2 part of iso-propanol, and 0.1 part of ion exchange water was stirred at 80°C for 3 hours, followed by the addition of 1.4 parts of methyl orthoformate. The mixture was stirred for a further one hour while heating at the same temperature, to obtain a colorless transparent dispersion liquid of crosslinkable particles (A) (Dispersion Liquid "a"). 2 g of the Dispersion Liquid "a" was weighed on an aluminum dish and dried for one hour on a hot plate at 120°C. The dried material was weighed to indicate that the solid content was 35%.

### Preparation Example 2

A mixture of 8.3 parts of the organic compound (S2) synthesized in Synthetic Example 2, 91.7 parts of the methyl ethyl ketone silica sol (P1) (MEK-ST), and 0.8 parts of ion exchanged water was stirred at 80°C for 3 hours, followed by the addition of 4.9 parts of methyl orthoformate. The mixture was stirred for a further one hour while heating at the same temperature (80°C) to obtain a semitransparent dispersion liquid of crosslinkable particles (A) (Dispersion Liquid "b"). The solid content of the Dispersion Liquid "b" was measured in the same manner as in Preparation Example 1 to indicate that the solid content was 34%.

### Preparation Example 3

A mixture of 4.8 parts of the organic compound (S1) synthesized in Synthesis Example 1, 95.2 parts of isopropanol alumina sol (P2) (trade name: AS-150I, the number average particle diameter: 0.013 µm, alumina concentration: 5%, manufactured by Sumitomo Osaka Cement Co., Ltd.), 0.01 part of p-methoxyphenol, and 1.0 part of ion-exchanged water was stirred for 3 hours at 60°C. After the addition of 1.0 part of methyl orthoformate, the mixture was stirred for a further one hour to obtain a dispersion liquid of crosslinkable particles (A) (Dispersion Liquid "c"). The solid content of the Dispersion Liquid "c" was measured in the sama manner as in Preparation Example 1 to indicate that the solid content was 19%.

### Preparation Example 4

A mixture of 8.2 parts of the organic compound (S1) prepared in Synthetic Example 1, 91.8 parts of toluene zirconium oxide sol (P3) (the number average particle diameter: 0.01 µm, zirconium oxide concentration: 30%), and 0.1 part of ion exchanged water was stirred at 60°C for 3 hours, followed by the addition of 1.3 parts of methyl orthoformate and 41.2 parts methyl ethyl ketone. The mixture was stirred for a further one hour while heating at the same temperature to obtain a dispersion liquid of crosslinkable particles (A) (Dispersion Liquid "d"). The solid content of the Dispersion Liquid "d" was measured in the sama manner as in Preparation Example 1 to indicate that the solid content was 25%.

**Table 1**

| | Preparation Example | | | |
|---|---|---|---|---|
| | 1 | 2 | 3 | 4 |
| Dispersion Liquid of crosslinkable particles (A) | a | b | c | d |
| Organic compound | | | | |
| S1 | 8.7 | | 4.8 | |
| S2 | | 8.3 | | 8.2 |
| Oxide particle sol | | | | |
| P1 | 91.3 | 91.7 | | |
| P2 | | | 95.2 | |
| P3 | | | | 91.8 |
| Ion-exchanged water | 0.1 | 0.8 | 0.1 | 0.1 |
| Isopropanol Methyl ethyl ketone | 0.2 | | | 41.2 |
| Methy ortholformate | 1.4 | 4.9 | 1.0 | 1.3 |
| p-Methoxyphenol | | | 0.01 | |
| Solid components (%) | 35 | 34 | 19 | 25 |
| Oxide particles in raw materials (%) | 76 | 77 | 72 | 77 |
| P1: Methyl ethyl ketone silica sol (Silica concentration: 30%) P2: Isopropanol alumina sol (Alumina concentration: 15%) P3: Toluene zirconia sol (Zirconia concentration: 30%) | | | | |

### Examples for the preparation of compositions

Examples for the preparation of the composition of the present invention are shown in Examples 1-4 and Comparative Examples 1-2. The weight ratio of the components for the compositions are shown in Table 2.

### Example 1

151 parts of Dispersion Liquid "a" prepared in the Preparation Example 1 (the crosslinkable particles: 53 parts, dispersion medium: methyl ethyl ketone (MEK)),

22.5 parts of dipentaerythritol hexacrylate, and 22.5 parts of pentaerythritol tetracrylate were mixed. The mixture was concentrated using a rotary evaporator under reduced pressure to a volume of 129 parts. 122 parts of methyl isobutyl ketone (MIBK), 2.0 parts of a mixture of mono(2-methacryloyloxyethyl) acid phosphate and bis(2- methacryloyloxyethyl) acid phosphate (hereinafter may be called "phosphate monomer P-2M"), 0.9 parts of 1-hydroxycyclohexyl phenyl ketone, and 0.9 parts of 2-methyl-1-(4-(methylthio)phenyl)-2-morpholinopropanone-1 were added, and the mixture was stirred for two hours at 50°C to obtain a composition in the form of a homogeneous solution. The preparation was carried out in a room shielded from ultraviolet rays. The solid content of the composition was determined in the same manner as in Preparation Example 1, to find that the solid content was 40%.

### Examples 2 and 3

Compositions for Examples 2 and 3 were prepared in the same manner as in Example 1 except for using the components shown in Table 2.

### Example 4

279 parts of the dispersion liquid of Dispersion Liquid "c" prepared in the Preparation Example 3 (the crosslinkable particles: 53 parts, dispersion medium: toluene), 62 parts of cyclohexanone, 23.3 parts of dipentaerythritol hexacrylate, 23.3 parts of pentaerythritol triacrylate, 0.4 part of phosphate P-2M, 0.9 part of 1-hydroxycyclohexyl phenyl ketone, and 0.9 part of 2-methyl-1-(4-(methylthio)phenyl)-2-morpholinopropanone-1 were blended by stirring for two hours in a dry air stream in a container shielded from ultraviolet rays at 50°C, to obtain a composition in the form of a homogeneous solution. The solid content of the composition was determined in the same manner as in Preparation Example 1, to find that the solid content was 25%.

### Example 5

A composition for Example 5 was prepared in the same manner as in Example 4 except for using the components shown in Table 2.

### Comparative Example 1

A composition for Comparative Example 1 was prepared in the same manner as in Example 1 except for using the components shown in Table 2.

### Comparative Example 2

177 parts of methyl ethyl ketone silica sol (P1) used in the Preparation Example 1 (oxide particles (P): 53 parts, dispersion medium: methyl ethyl ketone (MEK)), 22.5 parts of dipentaerythritol hexacrylate, and 22.5 parts of pentaerythritol tetracrylate were mixed, and the mixture was concentrated using a rotary evaporator under reduced pressure to a volume of 129 parts. 122 parts of methyl isobutyl ketone (MIBK), 2.0 parts of phosphate monomer P-2M, 0.9 parts of 1-hydroxycyclohexyl phenyl ketone, and 0.9 parts of 2-methyl-1-(4-(methylthio)phenyl)-2-morpholinopropanone-1 were added, and the mixture was stirred for two hours at 50°C to obtain a composition in the form of a homogeneous solution. The solid content of the composition was determined in the same manner as in Preparation Example 1, to find that the solid content was 40%.

### Evaluation of cured products

To demonstrate the effects of the composition of the present invention, the cured products obtained from the above-mentioned compositions by coating, drying, and exposure to radiation were evaluated. The evaluation methods used were as follows. The results of the evaluation are shown in Table 2.

### 1. Coating, drying, and curing conditions

In Examples 1-4 and Comparative Examples 1-2 in Table 2, the compositions were applied to substrates using a bar coater so as to produce dry films with a thickness of 10 µm, dried in a hot blast oven at 80°C for 3 minutes, irradiated at a dose of 1 J/cm² using a conveyer-type mercury lamp, and stored at 25°C for 24 hours before the evaluation.

### 2. Substrates

Glass plates were used for the pencil hardness test, polyethylene terephthalate (PET) films with a thickness of 188 µm were used for the steel wool scratch resistance test and the evaluation of adhesion, and PET films with a thickness of 100 µm were used for curling property test, and an acrylic plate of 2 mm were used for the evaluation of abrasion resistance test.

### 3. Evaluation method

* Pencil hardness:
   Cured coatings on the glass substrates were evaluated according to JIS K5400.
* Adhesion (%):
   The number of remaining 1 mm x 1 mm squares among 100 squares in the cellophane tape cross-cut peeling test according to JIS K5400 was counted and the percentage was determined to evaluate the adhesion.
* Steel wool (SW) scratch resistance:
   The Gakushin-type abrasion tester manufactured by Tester Industry Co., Ltd. was reciprocated 30 times using #0000 steel wool with a load of 500 g to evaluated scratch conditions of the coating film surface by eye observation. The case where no scratch was found was rated as "Excellent", where there were 1-10 scratches was rated as "Good", and where more than 10 scratches was found was rated as "Bad".
* Abrasion resistance:
   Abrasion resistance was measured according to the method of JIS K5400 using a Tabor tester (manufactured by Yasuda Seiki Co., Ltd.) and a CS-10F abrasion wheel. The test specimens were rotated 500 times at a load of 500 g, to determine change in the weight (mg) before and after the test.
* Curling property test:
   A coating was prepared on a PET film with a thickness of 100 µm using the composition of the present invention, immediately followed by cutting of 10 cm x 10 cm strips with a cutter knife. The strips were left at 25°C and RH 50% for 24 hours to measure the warping value (mm) from the four corners and calculated the average.

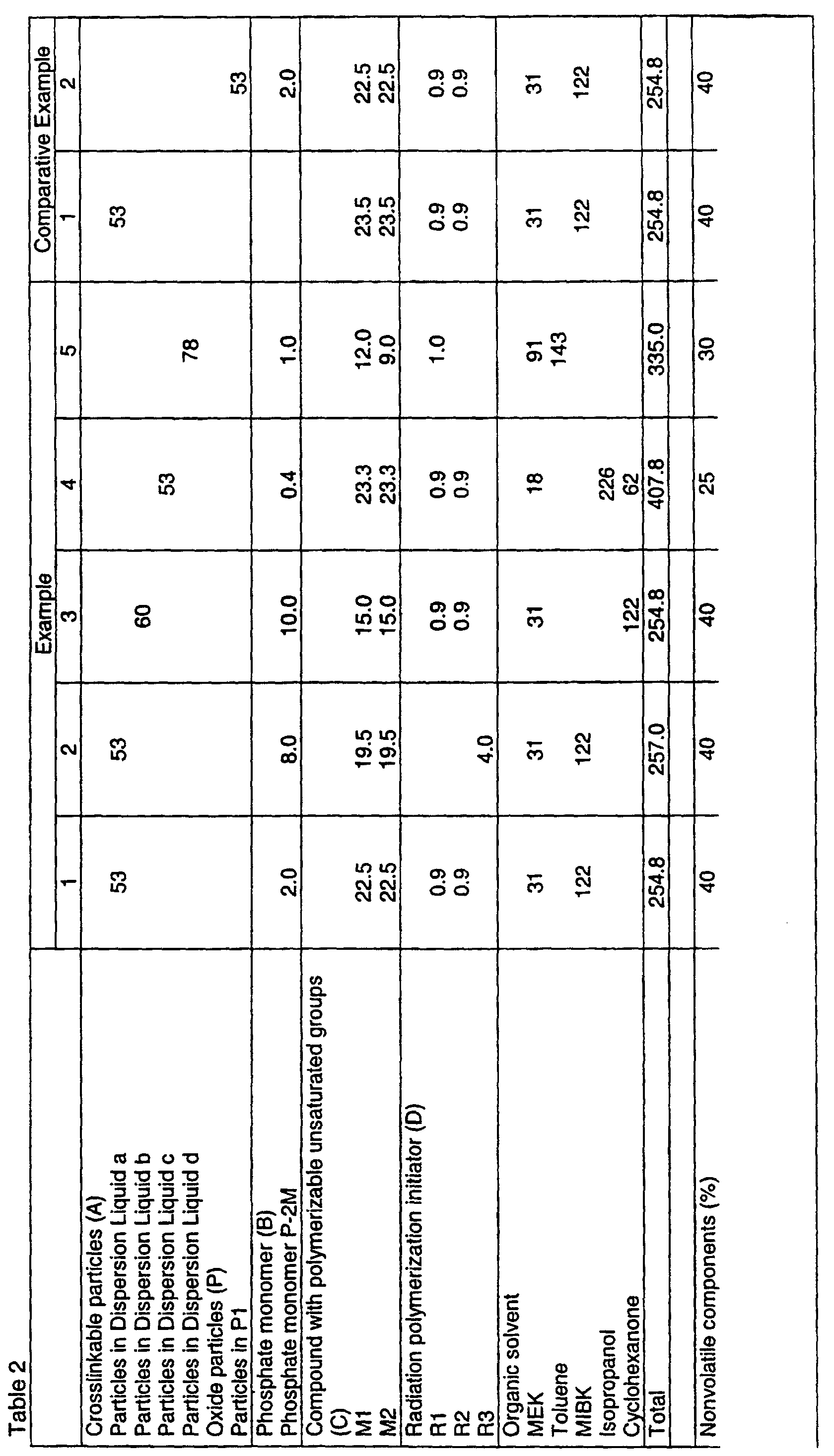

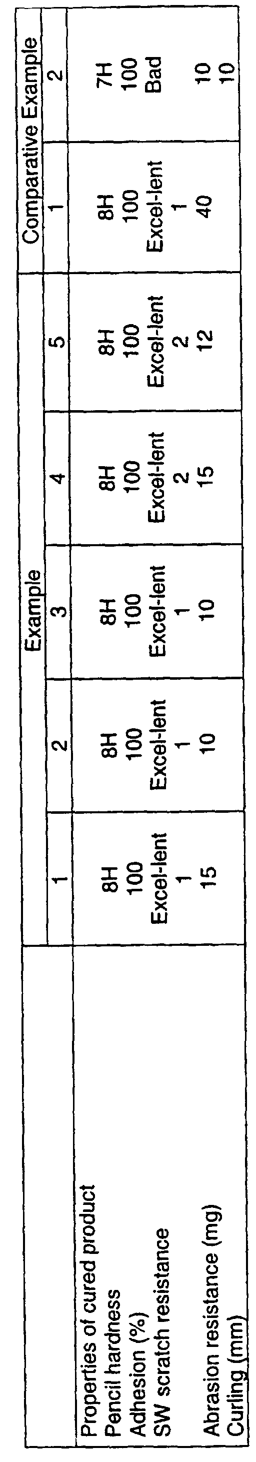

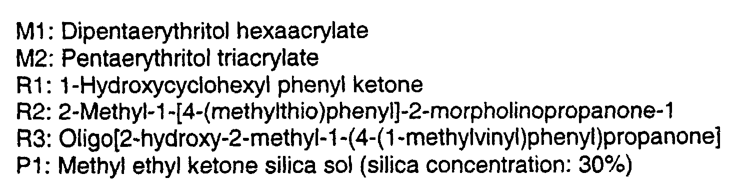

### Effect of the Invention

As described above, the present invention provides a resin composition exhibiting excellent coatability and capable of forming coatings with high hardness, superior scratch resistance, excellent abrasion resistance, low curling properties, and superb adhesion, particularly well balanced hardness, scratch resistance, abrasion resistance, and low curling properties, on the surface of various substrates, as well as the cured products made from the resin composition.

## Claims

1. A resin composition comprising:
(A) particles prepared by bonding at least one oxide of an element selected from the group consisting of silicon, aluminum, zirconium, titanium, zinc, germanium, indium, tin, antimony, and cerium, and an organic compound which includes a polymerizable unsaturated group,
(B) a polymerizable acid phosphate of the following formula (1), 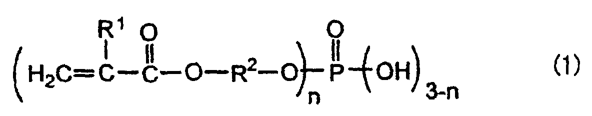 wherein R¹ is a hydrogen atom or a methyl group, R² is a divalent organic group, and n is an integer of 1 or 2, and
(C) a compound other than the compound (B) having at least two polymerizable unsaturated groups in the molecule.

2. The resin composition according to claim 1, wherein said organic compound includes the group shown by the following formula (2) in addition to the polymerizable unsaturated group, 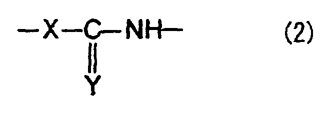
wherein X represents NH, O (oxygen atom), or S (sulfur atom), and Y represents O or S.

3. The resin composition according to claim 1 or 2, wherein the organic compound includes a group represented by [-O-C(=O)-NH-] and at least one of the groups represented by
[-O-C(=S)-NH-] or [-S-C(=O)-NH-].

4. The resin composition according to any one of claims 1-3, wherein the organic compound is a compound having a silanol group or a compound which forms a silanol group by hydrolysis.

5. The resin composition according to any one of claims 1 to 4, wherein the content of the polymerizable acidic phosphate (B) is from 0.01 to 15 parts by weight for 100 parts by weight of the total amount of the components (A), (B), and (C).

6. The resin composition according to any one of claims 1 to 5, wherein the polymerizable acidic phosphate (B) is mono(2-(meth)acryloyloxyethyl) acid phosphate or bis(2-(meth)acryloyloxyethyl) acid phosphate, or both.

7. Use of the resin compostion as defined in anyone of claims 1-6 in the production of a cured product.

8. A cured product produced by curing the resin composition according to any one of claims 1 to 6.

## Patentansprüche

1. Harzzusammensetzung, umfassend:
(A) Teilchen, die durch das Binden zumindest eines Oxids eines Elements, das aus der Gruppe ausgewählt ist, die aus Silicium, Aluminium, Zirkonium, Titan, Zink, Germanium, Indium, Zinn, Antimon und Cer besteht und einer organischen Verbindung, die eine polymerisierbare ungesättigte Gruppe enthält, hergestellt wurden,
(B) ein polymerisierbares Säurephosphat der folgenden Formel (1), 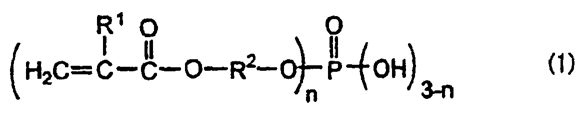 worin R¹ ein Wasserstoffatom oder eine Methylgruppe ist, R² eine zweiwertige organische Gruppe ist und n eine ganze Zahl von 1 oder 2 ist und
(C) eine Verbindung, die sich von der Verbindung (B) unterscheidet, mit zumindest zwei polymerisierbaren ungesättigten Gruppen im Molekül.

2. Harzzusammensetzung nach Anspruch 1, wobei die organische Verbindung zusätzlich zu der polymerisierbaren ungesättigten Gruppe die durch die folgende Formel (2) dargestellte Gruppe umfaßt 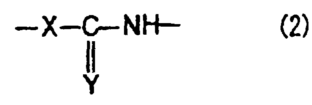 worin X NH, O (Sauerstoffatom) oder S (Schwefelatom) und Y O oder S darstellt.

3. Harzzusammensetzung nach Anspruch 1 oder 2, wobei die organische Verbindung eine durch [-O-C(=O)-NH-] dargestellte Gruppe und zumindest eine der Gruppen, die durch [-O-C(=S)-NH-] oder [-S-C(=O)-NH-] dargestellt werden, umfaßt.

4. Harzzusammensetzung nach einem der Ansprüche 1 bis 3, wobei die organische Verbindung eine Verbindung mit einer Silanolgruppe oder eine Verbindung, die durch Hydrolyse eine Silanolgruppe bildet, ist.

5. Harzzusammensetzung nach einem der Ansprüche 1 bis 4, wobei der Gehalt des polymerisierbaren Säurephosphats (B) von 0,01 bis 15 Gewichtsteile, bezogen auf 100 Gewichtsteile der Gesamtmenge der Komponenten (A), (B) und (C), beträgt.

6. Harzzusammensetzung nach einem der Ansprüche 1 bis 5, wobei das polymerisierbare Säurephosphat (B) Mono(2-meth(acryloyloxyethyl)säurephosphat oder Bis(2-(meth)acryloyloxyethyl)säurephosphat oder beides ist.

7. Verwendung der Harzzusammensetzung, wie sie in einem der Ansprüche 1 bis 6 definiert ist, bei der Herstellung eines gehärteten Produkts.

8. Gehärtetes Produkt, hergestellt durch die Härtung der Zusammensetzung nach einem der Ansprüche 1 bis 6.

## Revendications

1. Composition de résine comprenant :
(A) des particules préparées en liant au moins un oxyde d'un élément choisi dans le groupe formé par le silicium, l'aluminium, le zirconium, le titane, le zinc, le germanium, l'indium, l'étain, l'antimoine et le cérium, et un composé organique contenant un groupe insaturé polymérisable,
(B) un phosphate acide polymérisable de la formule (1) suivante, 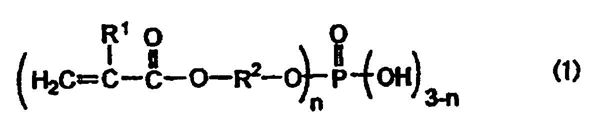 dans laquelle R¹ représente un atome d'hydrogène ou un groupe méthyle, R² représente un groupe organique divalent et n est un nombre entier égal à 1 ou 2 et,
(C) un composé autre que le composé (B) ayant au moins deux groupes insaturés polymérisables dans la molécule.

2. Composition de résine selon la revendication 1, dans laquelle ledit composé organique comprend, en plus du groupe insaturé polymérisable, le groupe représenté par la formule (2) suivante : 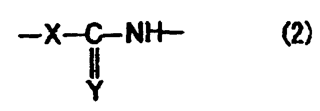 dans laquelle X représente NH, O (un atome d'oxygène) ou S (un atome de soufre) et Y représente O ou S.

3. Composition de résine selon la revendication 1 ou 2, dans laquelle le composé organique comprend un groupe représenté par [-O-C(=O)-NH-] et au moins un des groupes représentés par [-O-C(=S)-NH-] ou [-S-C(=O)-NH-].

4. Composition de résine selon l'une quelconque des revendications 1 à 3, dans laquelle le composé organique est un composé ayant un groupe silanol ou un composé qui forme un groupe silanol par hydrolyse.

5. Composition de résine selon l'une quelconque des revendications 1 à 4, dans laquelle la teneur en phosphate acide polymérisable (B) est comprise entre 0,01 et 15 parties en poids, pour 100 parties en poids de la quantité totale des composants (A), (B) et (C).

6. Composition de résine selon l'une quelconque des revendications 1 à 5, dans laquelle le phosphate acide polymérisable (B) est un phosphate acide de mono(2-(méth)acryloyloxyéthyle) ou un phosphate acide de bis(2-(méth)acryloyloxyéthyle) ou les deux.

7. Utilisation de la composition de résine telle que définie dans l'une quelconque des revendications 1 à 6 dans la production d'un produit durci.

8. Produit durci fabriqué en durcissant la composition de résine selon l'une quelconque des revendications 1 à 6.
